# EUROPÄISCHE PATENTSCHRIFT

(11) **EP 0 475 338 B1**
(45) Veröffentlichungstag und Bekanntmachung des Hinweises auf die Patenterteilung: **28.12.1994**
(21) Anmeldenummer: 91115242.9
(22) Anmeldetag: 10.09.1991
(51) Int. Cl.: B01D 19/00, B01D 35/01, B04C 5/13

(54) **Einrichtung zum Abscheiden gasförmiger Bestandteile einer Flüssigkeit**
Apparatus to separate gaseous substances from a liquid
Dispositif pour la séparation de substances gazéiformes d'un liquide

(30) Priorität: 13.09.1990 DE 4029025
(43) Veröffentlichungstag der Anmeldung: 18.03.1992
(73) Patentinhaber: F.A. SENING GMBH, D-22525 Hamburg (DE)
(72) Erfinder: Regenbogen, Heinrich, Dr.-Ing., W-2155 Jork-Borstel (DE); Koschubat, Heinz, W-2000 Hamburg 67 (DE)
(74) Vertreter: Meyer, Ludgerus A., Dipl.-Ing.

(56) Entgegenhaltungen:
- DE-A- 2 160 747
- DE-A- 2 335 238
- DE-A- 3 430 301

## Beschreibung

Die Erfindung betrifft eine Einrichtung zum Abscheiden gasförmiger Bestandteile einer Flüssigkeit nach dem Oberbegriff des Anspruchs 1.

Wegen erhöhter Sicherheitsanforderungen bei der Beförderung gefährlicher Güter ist man in den letzten Jahren dazu übergegangen, die Schwerpunke von Tanklastwagen niedriger zu setzen. Die Folge ist, daß die zur Verfügung stehende Bauhöhe für Abscheide- und Meßeinrichtungen kleiner geworden ist. Es besteht daher das Bedürfnis, Abscheide- und Meßeinrichtungen zu verwenden, deren Bauhöhe beträchtlich gegenüber bekannten Einrichtungen verringert ist.

Durch die Tieferlegung des Schwerpunktes von Tanklastwagen wurde das Druckgefälle der abzugebenden Flüssigkeit im Schwerkraftbetrieb verringert. Daraus entstand das zusätzliche Bedürfnis, die Druckverluste bei der Schwerkraftabgabe im Leitungs- und Meßsystem des Tanklastwagens weiter zu verringern.

Aus der DE-PS 23 35 238 ist eine zylindrische Gasabscheidekammer mit tangentialem Einlauf zur Erzeugung eines Strömungwirbels bekannt, bei der die das Oberteil der Abscheidekammer bildende Abdeckhaube einen inneren Einsatz aufweist, der insbesondere als sich nach unten verjüngender Trichter ausgebildet ist. Die Trichteröffnung steht geringfügig aus der Abdeckhaube in die Zone des größten Unterdrucks des sich im Unterteil der Abscheidekammer ausbildenden Strömungswirbels vor. Innerhalb des Trichters sind ein Schwimmer sowie eine zusätzliche Gastrennkammer vorgesehen.

Aufgrund des trichterförmigen Einsatzes, dessen Form sich insbesondere aufgrund des unterzubringenden Schwimmers und der Gastrennkammer ergibt, ist der in der Haube verbleibende Raum zur zusätzlichen Gasabscheidung neben der eigentlichen Gasabscheidekammer relativ klein. Ferner ergibt sich eine erhebliche Bauhöhe der Abdeckhaube.

Obgleich der Gegenstand der DE-PS 23 35 238 beachtliche Ergebnisse zeigt, ist sein Aufbau im Hinblick auf die eingangs genannten Bedürfnisse nicht optimiert.

Eine ähnliche Abscheidekammer zeigt das DE-GM 19 77 234. Oberhalb des Flüssigkeitseinlaufs ist ein Gassammelraum mit einem Schwimmergehäuse vorgesehen. Im unteren Teil der Abscheideeinrichtung befindet sich ein trichterförmiger Filtereinsatz. Da die gesamte Einrichtung aus 3 übereinander gebauten wesentlichen Teilen besteht, ergibt sich eine zu große Bauhöhe für den Einsatz an modernen Tankwagen. Durch eine exzentrische Anordnung des Schwimmergehäuses im Gassammelraum ist eine Flüssigkeitsrotation in diesem Bereich nur schwer möglich.

Aus der DE 34 30 301 A1 ist ein Luftabschneider für eine Meßanlage zur Übernahme von Milch bekannt, der eine zylindrische Gasabscheidekammer mit tangentialen Einlauf und einen in einem Gehäuse geführten Schwimmer enthält. Dabei befindet sich unterhalb des Einlaufs eine ringförmige Trennwand, durch deren zentrale Öffnung das Schwimmergehäuse geführt ist. In der Trennwand befinden sich schräg nach unten und außen verlaufende Bohrungen, durch die die Milch in den unteren Zylinderraum des Luftabscheiders treten kann.

Diese Einrichtung ist nur bedingt für die Abscheidung von Luft aus Flüssigkeiten verwendbar, da infolge der vorgesehenen Bohrungen eine vielfache Aufteilung der einlaufenden Flüssigkeit erfolgt und damit eine verminderte Gasabscheideleistung erzielt wird.

Einen ähnlichen Aufbau zeigt die in der DE-OS 26 37 026 gezeigte Einrichtung. Hier ist zwischen Trennwand und äußerer Zylinderwand ein mit Strömungsleitblechen versehener Ringspalt vorgesehen. Die Abscheideleistung dürfte von der Einrichtung der DE 34 30 301 nicht besonders abweichen, da das gleiche Abscheideprinzip verwendet ist.

Schließlich zeigt die DE-OS 14 82 689 eine Gasabscheideeinrichtung, bei der der Entgasungsraum als eigenständiger Behälter ausgebildet ist. Aufgrund ihrer Größe ist diese Einrichtung nicht für moderne Tankwagen geeignet. Durch die den Schwimmer aufnehmende Verbindung zwischen Einlaufteil und Entgasungsraum ist nur ein begrenzter Durchsatz erreichbar.

Der Erfindung liegt daher die Aufgabe zugrunde, eine Einrichtung gemäß der in der DE-PS 23 35 238 bekannten Art zum Abscheiden gasförmiger Bestandteile einer Flüssigkeit anzugeben, die bei wenigstens gleicher oder verbesserter Abscheideleistung eine erheblich verringerte Bauhöhe aufweist, und deren Druckverluste gering sind.

Diese Aufgabe wird durch die im Anspruch 1 angegebene Erfindung gelöst. Vorteilhafte Weiterbildungen der Erfindung sind in Unteransprüchen angegeben.

Die erfindungsgemäße Einrichtung arbeitet nach dem Hydrozyklon-Prinzip. Ein tangential in eine Gasabscheidekammer einlaufender Flüssigkeitsstrom erzeugt in der Kammer einen umlaufenden Wirbel, durch dessen Drehgeschwindigkeit ein radiales Druckgefälle in dar Flüssigkeit erzeugt wird, das eine schnelle Gasabscheidung zur Achse der zylindrisch ausgebildeten Abscheidekammer hin ermöglicht. Das im wesentlichen in der Achse sich ansammelnde Gas wird in einem oberhalb des Einlaufs befindlichen Gassammelraum gesammelt. Nach Erreichen einer bestimmten Gasmenge öffnet eine durch einen Schwimmer gesteuerte Gasabzugsöffnung und entläßt das Gas an die Atmosphäre, wobei während diese Zeit die Abgabe von Flüssigkeit aus der Abscheidekammer gesperrt ist.

Gemäß der Erfindung ist vorgesehen, daß der zur Steuerung der Gasabzugsöffnung vorgesehene Schwimmer in einem Schwimmergehäuse geführt ist, das im Zentrum der Abscheidekammer am Oberteil der Abscheidekammer befestigt bzw. als Teil dessen ausgebildet ist. Das Schwimmergehäuse reicht bis in die Ebene des Einlaufs der Abscheidekammer hinein. Oberhalb des Einlaufs ist eine horizontal liegende Trennwand vorgesehen, die vorzugsweise zur Achse der Abscheidekammer hin keilförmig ausgebildet ist. Der Gassammelraum ist daher zwischen Haubenteil und Trennwand ausgebildet. Zwischen dem Innenrand der Trennwand und dem Schwimmergehäuse ist ein Ringspalt vorgesehen. Sofern die gesamte Einrichtung mit Flüssigkeit gefüllt ist, kann daher die einlaufende Flüssigkeit auch im Gassammelraum rotieren und dort zur Abscheidung vom Gas beitragen, ohne daß die Rotation durch außermittig angeordnete Schwimmer oder andere Trennkammern gestört würde.

Durch das weite Hineinführen des Schwimmergehäuses in die Ebene des Einlaufs hinein liegt der Schwimmer erheblich tiefer als es aus dem Stand der Technik bekannt ist. Eine zusätzliche Gasabtrennkammer kann im oberen Bereich der Abdeckhaube vorgesehen sein. Durch Vorsehen eines Schauglases kann die jeweilige Stellung des Schwimmers von außerhalb der Einrichtung beobachtet werden.

Durch die erfindungsgemäßen Maßnahmen läßt sich die Bauhöhe der gesamten Einrichtung um wenigstens 10% - 20% gegenüber bekannten Einrichtungen verringern.

Zur Verringerung des Druckabfalls in der Abscheidekammer ist erfindungsgemäß in weiterer Ausgestaltung vorgesehen, daß die im unteren Bereich zylinderförmige Abscheidekammer im Bereich des Einlaufs nicht kreisförmig ausgebildet ist, sondern daß der in. die Abscheidekammer eintretende Flüssigkeitsstrom eine Spirale beschreibt, bei der der einmal umgelaufene Flüssigkeitsstrom sich im wesentlichen parallel auf den neu eintretenden Flüssigkeitsstrom auflegt und damit die sonst auftretenden Stoßprobleme im Einlauf erheblich reduziert werden. Die Folge ist, daß die Druckverluste in der Abscheideeinrichtung sich um bis zu 30% verringern lassen. Bei unveränderter Abscheideleistung kann die Flüssigkeitsabgabe daher erheblich schneller als beim Stand der Technik durchgeführt werden.

Zur Führung des Flüssigkeitsstroms entlang des sprialförmigen Weges ist vorgesehen, daß vorzugsweise eine gebogene Metallplatte mit einem Umfang von etwa 180% in der Weise in den Einlaufbereich der Abscheidekammer eingesetzt wird, daß das Ablaufende des Einsatzes in einem Abstand zur Kammerinnenwand verläuft und in eine Richtung gerichtet ist, die parallel zum einlaufenden Flüssigkeitsstrom weist.

Die Erfindung wird nachstehend anhand eines Ausführungsbeispiels näher erläutert. Es zeigen:
- Fig. 1: eine Schnittansicht durch eine erfindungsgemäße Einrichtung,
- Fig. 2: einen Schnitt entlang der Linie A-B von Fig. 1, und
- Fig. 3: einen Schnitt entlang der Linie C-D von Fig. 1.

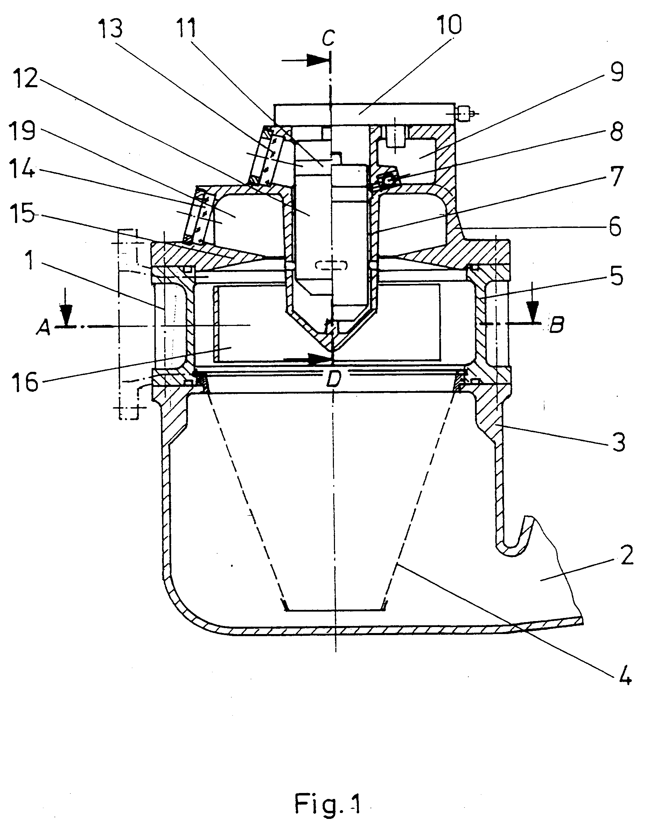

Fig. 1 zeigt ein Ausführungsbeispiel einer Einrichtung zum Abscheiden gasförmiger Bestandteile einer Flüssigkeit. Die gesamte Abscheideeinrichtung besteht vorzugsweise aus drei Hauptbestandteilen, nämlich einem Filtertopf 3, einem Einlaufteil 5 und einem Haubenteil 6. Der Filtertopf 3 ist im wesentlichen zylinderförmig ausgebildet und weist an der Unterseite einen Auslauf 2 auf. In den Filtertopf ist ein Filtereinsatz 4 zentral eingesetzt, der insbesondere nach unten kegelförmig sich verengend verläuft.

Mit annähernd gleichem Durchmesser ist auf den Filtertopf 3 das Einlaufteil 5 aufgesetzt, das einen Einlauf 1 aufweist. Filtertopf 3 und Einlaufteil 5 bilden eine Einheit, in die die Flüssigkeit über den Einlauf 1 einströmt, an der spiralförmigen Wand des Einlaufteils und in dem Filtertopf in schnelle Drehung versetzt wird und dabei durch Zentrifugalkräfte entgast wird und aus der die Flüssigkeit über den Auslauf 2 in die anschließende Meßanordnung übertritt.

Auf das Einlaufteil 5 ist das Haubenteil 6 aufgesetzt, das über eine Trennwand 15 vom Einlaufteil abgetrennt ist. Über ein Schauglas 14 kann von außerhalb der Einrichtung festgestellt werden, ob sich in dem Gassammelraum 19 Flüssigkeit oder Gas befindet.

Von der oberen Innenseite des Haubenteils 6 führt eine zentrale zylinderförmige Schwimmerkammer durch die Öffnung der Trennwand (15) bis in das Einlaufteil 5. Das Schwimmergehäuse 7 ist auf der Unterseite kegelig ausgeführt. Innerhalb des Schwimmergehäuses ist ein Schwimmer 12 geführt, der so gesteuert ist, das er im aufschwimmenden Zustand (Fig. 1, linke Bildhälfte) über den Steuerkopf 10 eine Entgasungsöffnung im Haubenteil geschlossen hält und den Auslauf 2 öffnet, während er im abgesenkten Zustand, wie in Fig. 1 in der rechten Bildhälfte dargestellt, über den Steuerkopf 10 den Auslauf 2 absperrt und ein Auslaßventil im Haubenteil öffnet, um das im Gassammelraum 19 befindliche Gas abzulassen.

Aus dem Gassammelraum 19 tritt das Gas über einen Vorabscheideraum 9 an die Atmosphäre aus. Um zu vermeiden, daß Flüssigkeit in den Vorabscheideraum 9 gelangt, ist ein Rückschlagventil 8 vorgesehen.

Über ein Schauglas 13 kann die jeweilige Stellung des Schwimmers 12 festgestellt werden. Zu diesem Zweck weist der Schwimmer eine Markierung 11 auf, beispielsweise eine farbige Markierung, deren Stellung von außerhalb des Gerätes durch das Schauglas 13 feststellbar ist.

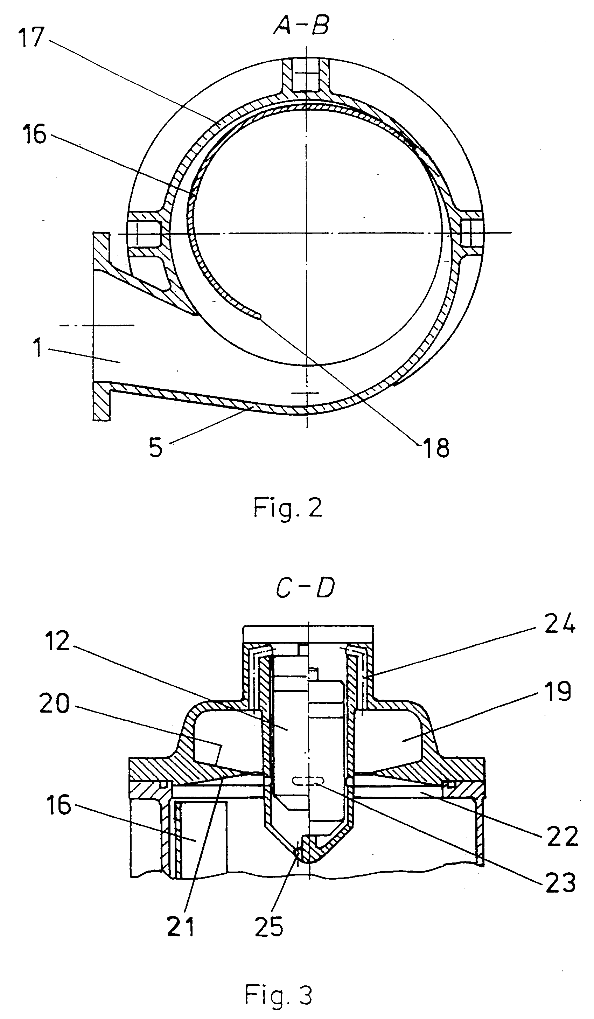

Fig. 2 zeigt eine Schnittansicht entlang der Linie A-B von Fig. 1. Durch den Einlauf 1 wird die einströmende Flüssigkeit tangential in das Einlaufteil 5 eingeleitet und fließt zunächst entlang der hier spiralförmigen Zylinderwand 17. Etwa nach einem Umlauf um 180° beginnt ein spiralförmiges Führungsteil 16, dessen Ende mit der Ziffer 18 gekennzeichnet ist. Dieses Führungsteil 16 ist in das Einlaufteil 5 lose eingesetzt, so daß es bei Bedaf entfernbar ist, ohne daß die grundsätzliche Funktion der Einrichtung gestört wird.

Das Führungsteil besteht insbesondere aus einem spiralförmig gebogenen Blechteil etwa der Höhe des Einlaufteils 5. Es wird durch Halteklammern oder Haltebolzen im Einlaufteil 5 befestigt. Es kann auch vorgesehen sein, daß das Führungsteil 16 einen einstückigen Bestandteil des Filtereinsatzes 4 bildet, so daß beim Austauschen des Filtereinsatzes 4 das Führungsteil 16 mit entfernt wird. Der Verlauf des Führungsteils 16 kann sowohl den oberen Umfang des Filtereinsatzes 4 schneiden als auch größer oder kleiner ausgebildet sein, solange der Flüssigkeitsstrom entlang der Zylinderwand im wesentlichen laminar verläuft.

Der Einsatz des Führungsteils 16 hat den besonderen Vorteil, daß der um 360° umlaufene Flüssigkeitsstrom nicht auf den nachfolgenden Flüssigkeitsstrom aufstößt und dort Stoßverluste verursacht, sondern sich laminar an den nachfolgenden Flüssigkeitsstrom anlegt, so daß eine größere Harmonisierung des Flüssigkeitsstroms in der Abscheidekammer erreichbar wird. Durch diese Laminarisierung erhöht sich die Fließgeschwindigkeit in der Kammer und damit indirekt auch das Abscheidevermögen. Trotz verringerter Gesamtbauhöhe der Abscheideeinrichtung hat es sich gezeigt, daß der Abscheidegrad gegenüber bekannten Einrichtungen zumindest gleich geblieben ist. Wesentlich verringert hat sich jedoch der Druckverlust der die Kammer durchströmenden Flüssigkeit.

Fig. 3 zeigt das Haubenteil 6 in vergrößerter Darstellung, entlang der Linie C-D, von Fig. 1 geschnitten. Der Schwimmer 12, der in der Darstellung jeweils in seiner einen Hälfte in oberer und in der anderen Hälfte in unterer Stellung dargestellt ist, wird in dem Schwimmergehäuse 7 geführt. Damit bei fallendem Flüssigkeitspiegel der Schwimmer unmittelbar nachfolgen kann, ohne daß an seiner Oberseite sich ein Vakuum mit der Folge des Zurückhaltens des Schwimmers bildet, ist eine Verbindungsleitung 24 zwischen Gassammelraum 19 und der Oberseite des Schwimmers 12 vorgesehen.

Im mittleren Bereich des Schwimmergehäuses 7 sind mehrere Entwässerungsöffnungen 23 vorgesehen, durch die das Innere des Schwimmergehäuses 7 mit der Abscheidekammer in Verbindung steht. Die relativ großen Durchlaßöffnungen lassen ein unmittelbares Folgen des Schwimmers aufgrund geänderter Flüssigkeitsstände zu. Am unteren Ende des Schwimmergehäuses 7 ist ferner eine Öffnung 25 relativ kleinen Durchmessers vorgesehen, durch die Restflüssigkeit in die Abscheidekammer abfließen kann, sofern das untere Ende des Schwimmergehäuses nicht in Flüssigkeit eintaucht. Durch geeignete Festlegung der Größenrelationen zwischen der Öffnung 25 und den Durchbrüchen 23 läßt sich eine Dämpfung des Schwimmers 12 erreichen, wodurch insbesondere bei Abgabeende der Schwimmerstand Gaseinbrüchen in verbesserter Weise folgen kann.

Die Trennwand 15 zwischen Einlaufteil 5 und Haubenteil 6 ist insbesondere scheibenförmig ausgebildet und kann als integraler Bestandteil der Haube 6 oder als Einsatzteil ausgebildet sein. Vorzugweise ist die Trennwand 15 zur Achse hin kegelförmig zulaufend ausgebildet, um Flüssigkeit von der Oberseite 20 leichter ablaufen lassen zu können und andererseits Gase von der Unterseite 21 besser nach oben steigen zu lassen. Zwischen der Trennwand 15 und dem Schwimmergehäuse 7 ist ein Spalt vorgesehen, durch den sowohl Flüssigkeit aus dem Gassammelraum 19 ausfliessen kann als auch Gas aus dem Einlaufteil und aus dem Filtertopf 3 in den Gassammelraum 19 übertreten kann. Dadurch, das der Gassammelraum 19 ringförmig ausgebildet ist, ohne daß Schwimmer oder andere Einbauten eine Kreisbewegung von in diesem Raum umlaufender Flüssigkeit stören trägt dieser Raum erheblich zur Abscheidung von Gasen aus der Flüssigkeit bei, soweit nicht der gesamte Raum 19 gasgefüllt ist.

Zur Vermeidung der Ausbildung von Gastaschen zwischen Führungsteil 16 und Zylinderwand 17 ist vorgesehen, daß die Höhe des Führungsteils 16 so gewählt ist, daß zwischen Führungsteil 16 und Trennwand 15 ein Freiraum 22 für den Durchtritt von Gas verbleibt.

Die Durchbrüche 23 und die Öffnungen 25 sollten verdeckt ausgebildet sein, um Manipulationsmöglichkeiten durch Öffnungen, bei spielsweise durch Einführung eines Drahtes oder ähnlichem, zu verhindern.

Das Schaltverhalten des Schwimmers sollte so eingestellt sein, daß im oberen Teil des Gassammelraums 19 immer etwas Gas verbleibt, um einen Austritt von Flüssigkeit durch die Entlüftungsöffnungen zu vermeiden.

### Bezugszeichenlist

- 1: Einlauf
- 2: Auslauf
- 3: Filterfopf
- 4: Filtereinsatz
- 5: Einlaufteil
- 6: Haubenteil
- 7: Schwimmergehäuse
- 8: Rückschlagventil
- 9: Vorabscheideraum
- 10: Steuerkopf
- 11: Markierung
- 12: Schwimmer
- 13: Schauglas
- 14: Schauglas
- 15: Trennwand
- 16: Führungsteil
- 17: Zylinderwand
- 18: Führungsteilende
- 19: Gassammelraum
- 20: Trennwand-Oberseite
- 21: Trennwand-Unterseite
- 22: Freiraum
- 23: Entwässerungsöffnung
- 24: Verbindungsleitung
- 25: Öffnung

## Patentansprüche

1. Einrichtung zum Abscheiden gasförmiger Bestandteile einer Flüssigkeit mit einer vor einem Durchflußmesser liegenden zylindrischen Gasabscheidekammer mit tangentialem Einlauf (1) zur Erzeugung eines Strömungswirbels in der Kammer, einem im unteren Bereich der Kammer angeordneten Auslauf (2) und einem oberhalb des Einlaufs (1) vorgesehenen Gassammelraum (19) mit einer vom Flüssigkeitsniveau in der Kammer durch einen Schwimmer (12) steuerbaren Gasabzugsöffnung, wobei der Schwimmer (12) in einem in der Abscheidekammer angeordneten mit Öffnungen (23, 25) versehenen Schwimmergehäuse (7) geführt ist, dadurch gekennzeichnet, daß unmittelbar oberhalb des Einlaufs (1) eine im wesentlichen horizontal angeordnete ringförmige Trennwand (15) vorgesehen ist, durch deren zentrale Bohrung mit Abstand zum inneren Rand der Trennwand das Schwimmergehäuse weit in den Einlaufbereich geführt ist.

2. Einrichtung nach Anspruch 1, dadurch gekennzeichnet, daß der Einlaufbereich der Gasabscheidekammer spiralförmig in der Weise ausgebildet ist, daß der in die Kammer in horizontaler Ebene einlaufende Flüssigkeitsstrom nach Umlauf um die Kammer im wesentlichen tangential zum durch den Einlauf (1) weiter einfließenden Flüssigkeitsstrom geführt wird.

3. Einrichtung nach Anspruch 2, dadurch gekennzeichnet, daß in die Gasabscheidekammer im Bereich des Einlaufs (1) ein im wesentlichen spiralförmig verlaufendes Führungsteil (16) einsetzbar ist, das etwa um 180° gegenüber dem Einlauf versetzt an der Innenwand der Gasabscheidekammer beginnend mit wachsendem Abstand zur Innenwand bis zum Einlauf (1) geführt ist.

4. Einrichtung nach Anspruch 3, dadurch gekennzeichnet, daß das Führungsteil (16) den Rand eines im unteren Bereich der Gasabscheidekammer eingesetzten Filtereinsatzes (4) überschneidet.

5. Einrichtung nach Anspruch 3 oder 4, dadurch gekennzeichnet, daß das Führungsteil (16) als Teil des in der Gasabscheidekammer vorgesehenen Filtereinsatzes (4) ausgebildet ist.

6. Einrichtung nach Anspruch 3, dadurch gekennzeichnet, daß das Führungsteil blechförmig ausgestaltet ist, und daß dessen Oberkante einen Abstand zur Trennwand (15) aufweist.

7. Einrichtung nach Anspruch 1, dadurch gekennzeichnet, daß die Trennwand (15) zur Achse der Abscheidekammer hin keilförmig ausgebildet ist.

8. Einrichtung nach Anspruch 1, dadurch gekennzeichnet, daß das Schwimmergehäuse eine untere relativ enge Auslauföffnung (25) und im mittleren Bereich unterhalb der Trennwand (15) mehrere gegenüber der unteren Auslauföffnung vergrößerte Durchgangsöffnungen (23) aufweist.

9. Einrichtung nach Anspruch 1 oder 8, dadurch gekennzeichnet, daß das Schwimmergehäuse (7) über wenigstens eine im Kopfbereich des Schwimmergehäuses angeordnete Bohrung (24) mit dem Gassammelraum verbunden ist.

10. Einrichtung nach Anspruch 1, dadurch gekennzeichnet, daß der Schwimmer (12) im oberen Bereich eine Markierung (11) aufweist, die über ein Schauglas (13) von außen bezüglich seiner Höheneinstellung ablesbar ist.

## Claims

1. Device for removing gaseous constituents of a liquid comprising a cylindrical gas separating chamber situated upstream of a flow meter and having a tangential inlet (1) for generating a flow vortex in the chamber, an outlet (2) disposed in the lower region of the chamber and a gas collecting space (19) provided above the inlet (1) and having a gas offtake opening which can be controlled by the liquid level in the chamber by means of a float (12), the float (12) being guided in a float housing (7) disposed in the separating chamber and provided with openings (23, 25), characterized in that there is provided, immediately above the inlet (1) an essentially horizontally disposed annular partition (15) through whose central bore the float housing is fed far into the inlet region at a distance from the inner edge of the partition.

2. Device according to Claim 1, characterized in that the inlet region of the gas separating chamber is of a spiral design such that, after circulating round the chamber, the liquid flow entering the chamber in a horizontal plane is fed essentially tangentially to the liquid flow continuing to flow in through the inlet (1).

3. Device according to Claim 2, characterized in that an essentially spirally extending guide piece (16) can be inserted into the gas separating chamber in the region of the inlet (1), which guide piece (16) is arranged at an increasing distance from the inside wall until it reaches the inlet (1) starting at the inside wall of the gas separating chamber at a position offset by approximately 180° with respect to the inlet.

4. Device according to Claim 3, characterized in that the guide piece (16) overlaps the periphery of a filter insert (4) inserted in the lower region of the gas separating chamber.

5. Device according to Claim 3 or 4, characterized in that the guide piece (16) is designed as part of the filter insert (4) provided in the gas separating chamber.

6. Device according to Claim 3, characterized in that the guide piece is in sheet-metal form and in that its upper edge is at a distance from the partition (15).

7. Device according to Claim 1, characterized in that the partition (15) is of wedge-shape design towards the axis of the separating chamber.

8. Device according to Claim 1, characterized in that the float housing has a lower, relatively narrow outlet opening (25) and a plurality of passage openings (23), which are larger than the lower outlet opening, in the central region below the partition (15).

9. Device according to Claim 1 or 8, characterized in that the float housing (7) is linked to the gas collecting space via at least one bore (24) disposed in the head region of the float housing.

10. Device according to Claim 1, characterized in that, in the upper region, the float (12) has a marking (11) which can be read off in terms of its height adjustment from the outside via an inspection window (13).

## Revendications

1. Dispositif de séparation de composants gazeux d'un liquide comportant une chambre cylindrique de séparation des gaz située en amont d'un débitmètre avec une entrée tangentielle (1) en vue de la production d'un courant tourbillonnaire dans la chambre, une sortie (2) située dans la région inférieure de la chambre et un collecteur de gaz (19) prévu au-dessus de l'entrée (1) avec un orifice d'évacuation de gaz pouvant être commandé par un flotteur en fonction du niveau de liquide dans la chambre, le flotteur (12) étant guidé dans un logement de flotteur (7) pourvu d'orifices (23, 25) et disposé dans la chambre de séparation, caractérisé en ce que, directement au-dessus de l'entrée (1) est prévue une cloison de séparation (15), annulaire, disposée en substance horizontalement, à travers l'ouverture centrale de laquelle le logement du flotteur est guidé profondément dans la région d'entrée tout en étant espacé du bord interne de la cloison de séparation.

2. Dispositif selon la revendication 1, caractérisé en ce que la région d'entrée de la chambre de séparation des gaz est de conception spiralée? de sorte que le flux de liquide pénétrant dans la chambre en plan horizontal, après avoir fait le tour de la chambre, est guidé de manière sensiblement tangentielle par rapport au flux de liquide continuant à pénétrer par l'entrée (1).

3. Dispositif selon la revendication 2, caractérisé en ce que? dans la chambre de séparation des gaz, dans la région de l'entrée (1), peut être placée une pièce de guidage (16) sensiblement spiralée qui, partant d'un endroit décalé d'environ 180° de l'entrée, au niveau de la paroi interne de la chambre de séparation des gaz s'étend jusqu'à l'entrée (1) en s'écartant progressivement de la paroi interne.

4. Dispositif selon la revendication 3, caractérisé en ce que la pièce de guidage (16) coupe le bord d'une cartouche de filtrage (4) installée dans la région inférieure de la chambre de séparation des gaz.

5. Dispositif selon la revendication 3 ou 4, caractérisé en ce que la pièce de guidage (16) est conçue comme une pièce de la cartouche de filtrage (4) prévue dans la chambre de séparation des gaz.

6. Dispositif selon la revendication 3, caractérisé en ce que la pièce de guidage est en tôle et son bord supérieur est espacé de la cloison de séparation (15).

7. Dispositif selon la revendication 1, caractérisé en ce que la cloison de séparation (15) est de conception cunéiforme s'amincissant en direction de l'axe de la chambre de séparation.

8. Dispositif selon la revendication 1, caractérisé en ce que le logement du flotteur présente une ouverture de sortie (25) inférieure relativement étroite et, dans la région médiane, sous la cloison de séparation (15), plusieurs ouvertures traversantes (23) agrandies par rapport à l'ouverture de sortie inférieure.

9. Dispositif selon la revendication 1 ou 8, caractérisé en ce que le logement du flotteur (7) est relié au collecteur de gaz par au moins un conduit (24) prévu dans la région supérieure du logement du flotteur.

10. Dispositif selon la revendication 1, caractérisé en ce que le flotteur (12) présente dans la région supérieure, un repère (11) qui permet de lire de l'extérieur son réglage de hauteur à travers un regard (13).
